Europäisches Patentamt

(19) European Patent Office

Office européen des brevets

(11) Numéro de publication : **0 044 589**
**B1**

(12) **FASCICULE DE BREVET EUROPÉEN**

(45) Date de publication du fascicule du brevet :
10.09.86

(21) Numéro de dépôt : **81200776.3**

(22) Date de dépôt : **07.07.81**

(51) Int. Cl.⁴ : **G 01 N 21/53**

(54) **Installation de mesure de la limite de visibilité dans le brouillard.**

(30) Priorité : **17.07.80 EP 80200696**

(43) Date de publication de la demande :
**27.01.82 Bulletin 82/04**

(45) Mention de la délivrance du brevet :
**10.09.86 Bulletin 86/37**

(84) Etats contractants désignés :
**AT BE CH DE FR GB IT LI LU NL SE**

(56) Documents cités :
**FR-A- 1 459 336**
**FR-E-   94 472**
**US-A- 3 348 059**

(73) Titulaire : **Rouet, Paul**
**2 et 4 Avenue Meurée**
**B-6001 Marcinelle (BE)**

(72) Inventeur : **Rouet, Paul**
**2 et 4 Avenue Meurée**
**B-6001 Marcinelle (BE)**

(74) Mandataire : **Bossard, Franz et al**
**ACEC - Service des Brevets Boîte Postale 4**
**B-6000 Charleroi (BE)**

Jouve, 18, rue St-Denis, 75001 Paris, France

# Description

Dans les documents FR-A-1 459 336 et FR-E-94 472 on a décrit une installation de mesure de la distance limite de visibilité dans le brouillard, comprenant une série de feux disposée par exemple le long d'une piste d'attérissage d'un terrain d'aviation ou d'une autre aire de mesure, un dispositif. optique d'observation projetant l'image d'un ou de quelques feux de la série sur un écran d'observation, par exemple la cible d'un tube de prise de vue de télévision ou une ou plusieurs cellules photoélectriques et un dispositif de commande motorisé permettant la mise au point notamment de la focale variable du dispositif optique sur un feu choisi de la série et l'allumage simultané des feux visés par le dispositif optique. L'allumage des feux peut être continu ou clignotant.

L'invention a pour objet certaines améliorations de l'installation connue en vue d'en augmenter la fiabilité et les performances.

L'installation suivant l'invention est caractérisée en ce que le moteur du dispositif de commande, actionnant la mise au point de la focale variable du dispositif optique entraîne en même temps un ou plusieurs équipages mobiles qui se déplacent par rapport à un ou plusieurs équipages fixes, en ce que dans chaque ensemble constitué par un équipage mobile et un équipage fixe correspondants, l'un des deux équipages comprend au moins un détecteur ou palpeur d'informations numériques et/ou analogiques consignées sur l'autre des deux équipages et ayant pour objet le feu de la série des feux sur lequel la focale variable est mise au point. Ces informations numériques et/ou analogiques peuvent se rapporter notamment à des commandes d'allumage de certains feux de la série, par exemple à l'allumage du feu sur lequel la focale variable est mise au point et éventuellement des deux feux voisins, à la sélection d'un seuil de perception ou de détection en fonction du réglage de la focale variable, à la transmission de l'affichage de la distance limite de visibilité, si le feu sur lequel la focale variable est mise au point se trouve à la limite de visibilité ou à l'ajustage de l'orientation de l'optique pour centrer l'image du feu sur lequel la focale est mise au point en un endroit déterminé d'un écran ou sur la cible d'un détecteur photo-électrique et aussi à l'arrêt du mouvement du moteur lorsque la mise au point de la focale sur un des feux est terminée.

L'équipement suivant l'invention comprend de préférence un équipement automatique constitué par un détecteur de visibilité, par rapport à un seuil, d'un ou de plusieurs feux allumés, commandant la mise en route du moteur pour ajuster la focale variable sur un feu plus proche, s'il constate l'absence de visibilité ou un feu plus lointain, s'il constate que la visibilité est bonne et commandant l'affichage de la distance limite de visibilité, s'il constate que cette limite est atteinte.

Pour faciliter cette mesure de visibilité, le feu allumé ou les feux allumés pour la mesure sont de préférence clignotants à une fréquence sensiblement plus basse que la fréquence du courant alternatif d'alimentation des feux. Ceci permet de les distinguer sans erreur possible d'un feu de balisage ou d'un feu fixe ou ambulant quelconque.

L'invention est expliquée ci-dessous par rapport à un exemple d'une forme d'exécution en se référant au dessin annexé.

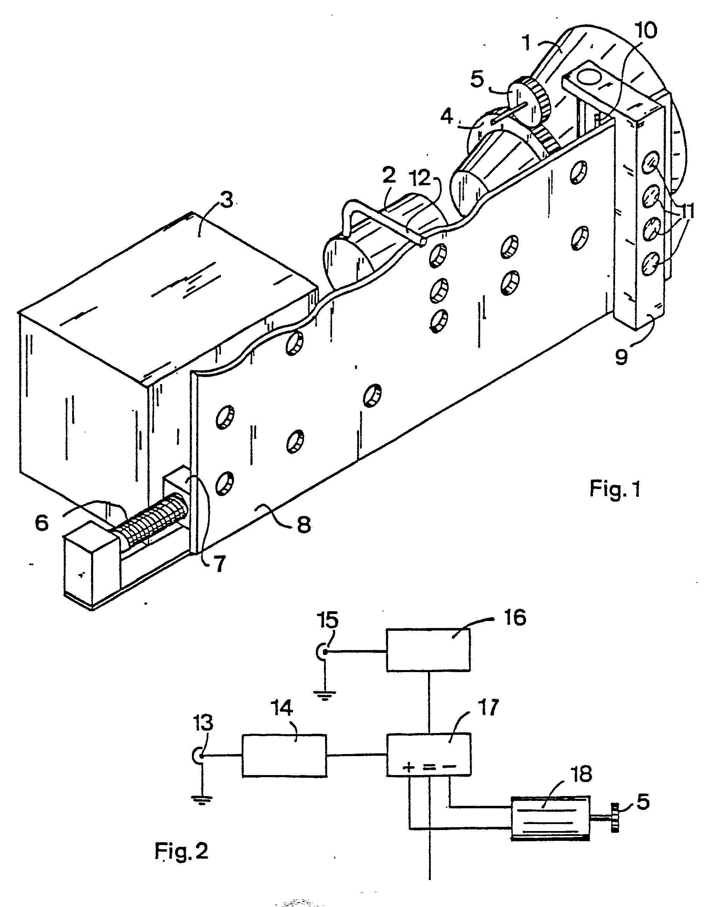

A la figure 1, un dispositif optique dirigé sur une série de feux, non représentée, est équipé d'un ensemble 1 « ZOOM » à focale variable et d'un ensemble optique mobile 2 permettant de centrer l'image d'un feu sur un endroit prédéterminé d'un écran ou sur la cible d'un détecteur photoélectrique, abrité dans un boîtier 3. L'ensemble 1 à focale variable porte une couronne dentée 4 entraînée par un pignon 5 d'un moteur, non représenté, qui entraîne également, via la couronne 4 et des engrenages, non visibles sur le dessin, un équipage mobile constitué par une vis mère 6 et un écrou 7. L'écrou 7 peut être solidaire d'une plaque métallique 8 qui se déplace à travers ou en face d'un équipage fixe 9 qui a la forme d'un étrier et qui supporte une rampe lumineuse 10 d'un côté de la plaque et un ensemble 11 de plusieurs détecteurs de l'autre côté de la plaque. Des trous pratiqués dans la plaque 8, en face des détecteurs 11, sont représentatifs d'informations numériques qui peuvent être captées par les détecteurs 11 et sont liées par exemple à des mises au point de la focale variable sur des feux déterminés de la série et à des réglages du circuit électronique de mesure.

Un profil particulier de l'arête supérieure de la plaque 8 permet la transmission d'une information analogique en fonction des mises au point de l'ensemble optique mobile 2 permettant le centrage du feu de la série sur lequel la focale variable est mise au point.

Plusieurs variantes sont possibles. Différentes informations peuvent être consignées sur des équipages différents. Au lieu de déplacer la plaque métallique 8, on peut déplacer l'étrier 9. Au lieu d'envisager une détection opto-électrique par transparence on peut songer à une détection de plages réfléchissantes ou on peut prévoir une détection magétique en équipant par exemple la plaque 8 de pastilles aimantées. Au lieu de déplacer une plaque rigide 8, on peut la remplacer par un ou plusieurs films souples tendus sur des tambours dont un est moteur et entraîné en même temps que la couronne 4. Le ou les films souples peuvent être soit opaques, par exemple métalliques, soit transparents et revêtus d'une couche opaque. Dans les deux cas, les films comportent des trous ou plages transparents ou réfléchissants représentatifs d'informations numériques ou analogiques.

A la figure 2 est montré un schéma bloc d'un équipement automatique. La cible d'un tube photoélectrique 13 reçoit de la lumière ambiante. Le tube 13 fonctionne ainsi en détecteur de la luminosité ambiante et influence un générateur de seuil 14. D'autre part, la cible d'un autre tube photo-électrique 15 reçoit la lumière clignotante d'un feu sur lequel le dispositif optique est mis au point. Cette lumière clignotante est de préférence due à une modulation par une fréquence fixe, prédéterminée par exemple 31, 27 ou 22 Hz du courant de lampe si la fréquence du courant alternatif est de 50 Hz. La fréquence peut varier d'un feu à l'autre. Le signal de sortie du tube photo-électrique 15 est envoyé dans un détecteur 16 de luminosité clignotante propre aux feux de la série des feux disposée le long de l'aire de mesure. Si le clignotant a lieu à une fréquence fixe, précise, le détecteur 16 peut être un détecteur synchrone, éventuellement adaptable aux fréquences propres de chaque feu. Les sorties du détecteur 16 d'une part et du générateur de seuil 14 d'autre part sont appliquées à un comparateur 17 qui comprend une sortie + , une sortie = et une sortie — et est relié d'une part à un moteur 18 entraînant le pignon 5 et d'autre part à un dispositif d'affichage non représenté. Le comparateur 17 peut être un dispositif électronique simple ou un micro-ordinateur assumant des commandes plus complexes que ceux décrits ci-dessus, grâce à la mémorisation de certaines données permettant, notamment d'éliminer des causes d'erreurs ou la transmission par une voix synthétique des résultats de mesure etc.

Lorsque la luminosité clignotante est bien visible par rapport au seuil de la luminosité ambiante, une impulsion apparaissant à la sortie + fait démarrer le moteur 18 dans le sens d'une mise au point de la distance focale variable 1 sur un feu plus lointain. Si ; au contraire, la luminosité clignotante n'est plus perceptible par rapport au seuil de la luminosité ambiante, une impulsion apparaissant à la sortie — fait démarrer le moteur 18 dans le sens d'une mise au point de la distance focale variable 1 sur un feu plus proche. Dans les deux cas, le moteur 18 est arrêté lorsque la mise au point sur le feu voisin est terminée et reste en repos pendant le temps de mesure. Lorsque la luminosité clignotante est à la limite de la visibilité, le moteur 18 n'est plus actionné, mais une impulsion sur la sortie = est transmise vers un dispositif d'affichage de la distance limite de visibilité dans le brouillard. La transmission de la valeur de mesure peut se faire sous une forme quelconque : allumage de textes préparés, allumage sur un tableau image des feux visibles, diffusion par voix synthétique ou phrases préenregistrées etc.

Afin de se protéger contre diverses erreurs par exemple une panne d'une ou de plusieurs lampes, une erreur due à une lampe cachée par un obstacle mobile ou fixe ou une erreur introduite par un petit banc de brouillard cachant partiellement ou totalement une ou deux lampes, mais laissant apparaître les autres feux de la série, il est avantageux de prévoir périodiquement l'exploration systématique de toute la série des feux par exemple en allumant une lampe à la fois et en mémorisant les feux visibles. A cette occasion, il est possible aussi, en supprimant l'intervention du seuil de perception, de contrôler par l'appareil de mesure l'existence de feux allumés considérés comme n'étant plus visibles pour un observateur ou pilote.

Il est aussi possible de n'utiliser qu'un seul détecteur photo-électrique et d'en mesurer d'une part la composante continue et d'autre part une composante alternative de fréquence déterminée, la composante continue étant appliquée au générateur de seuil 14 et la composante alternative au détecteur 16.

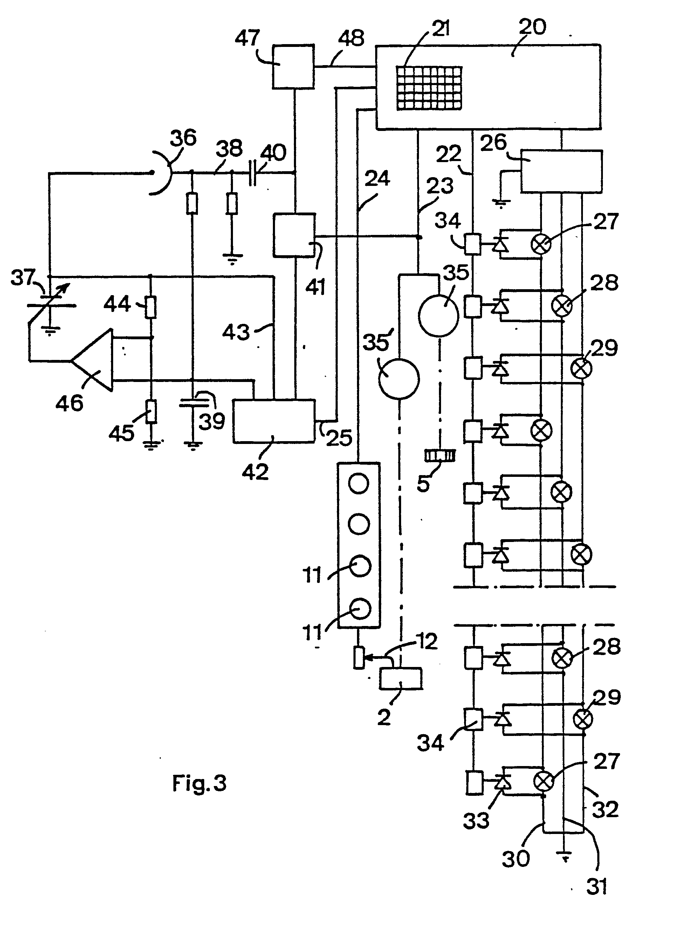

La figure 3 montre un schéma de commande complet. Un ordinateur 20 comprend un tableau de commande manuel 21 et plusieurs sorties 22, 23 et entrées 24, 25. Le tableau de commande manuel permet de sélectionner un fonctionnement automatique ou un fonctionnement entièrement manuel. Ce dernier ressemble au fonctionnement déjà décrit dans les documents FR-A-1459336 et FR-E-94472 et n'est pas expliqué ici. Une source d'alimentation 26 permet l'allumage de lampes 27, 28, 29 d'une série de feux disposée le long d'une aire de mesure sur le terrain. Les lampes de la série de feux peuvent être alimentées toutes en une même fréquence de clignotement, ce qui est suffisant, si une seule lampe est allumée à la fois. Si au contraire on désire allumer simultanément par exemple trois feux à la fois, la source d'alimentation 26 ne comprend par une, mais trois sorties de puissance, chacune pour une fréquence d'allumage différente, par exemple 31, 27 et 22 Hz. Les feux consécutifs de la série le long de l'aire de mesure sont reliés chacun dans un circuit de mise en série 30, 31, 32, raccordé à une des trois sorties de puissance. Chaque feu est disposé en parallèle par rapport à un dispositif de commutation 33. Dans chaque circuit 30, 31, 32 tous les feux sauf un seul sont court-circuités par les dispositifs 33. L'allumage des feux se fait par un ordre de commande émis sur une sortie 22 qui peut être un seul conducteur ou un ensemble de n conducteurs, n étant le nombre de feux de la série. Ces ordres de commande sont élaborés dans l'ordinateur 20 en fonction de signaux émis par les détecteurs 11 qui à leur tour traduisent la position de l'équipage mobile 8 (Fig. 1). Les données provenant des détecteurs 11 sont fournies à l'ordinateur à travers l'entrée 24. La sortie 22 est reliée à des dispositifs de commande 34 des dispositifs de commutation 33. En allumant trois feux à la fois, par le fait de rendre bloquant trois dispositifs 33, un dans chaque circuit 30, 31, 32, un seul feu est allumé dans chacun de ces circuits, de sorte que chacun des feux allumés clignote à une fréquence différente.

L'ordinateur 20 fournit également, par exemple sur la sortie 23, les ordres de mouvement pour le positionnement grossier du dispositif optique ainsi que notamment pour le positionnement de la focale variable de celui-ci. La sortie 23 est considérée ici comme sortie multiple pouvant commander un moteur 35 entraînant le pignon 5 et éventuellement d'autres servo-moteurs modifiant l'orientation de l'objectif non représenté, ou le moteur 35' commandant l'orientation de l'ensemble 2, si le bras 12 n'actionne pas directement cet ensemble 2 mais fonctionne en sélecteur de tension de commande par exemple.

Une cellule photométrique 36 qui peut être aussi un multiplicateur de photons se trouve normalement dans le boîtier 3 représenté à la figure 1. Il est alimenté par une tension d'alimentation fournie par une source 37 représentée, pour la simplicité, par une pile.

Lorsque la cible de la cellule 36 est frappée par une image d'un feu clignotant sur un fond de luminosité ambiante, le signal de sortie récolté à l'anode 38 de la cellule 36 est composé d'une composante continue apparaissant aux bornes d'un condensateur 39 et d'une composante alternative traversant un condensateur 40. La composante alternative entre dans un détecteur de tension de crête 41 dont la sensibilité est commandée par un ordre émis sur la sortie 23 de l'ordinateur 20 en fonction du feu allumé dont on désire mesurer la visibilité. Le détecteur 41 peut donc être rendu sensible, à tour de rôle, en fréquence et en phase aux luminosités engendrées par un des feux raccordés à une des sorties de puissance 30, 31, 32 de la source 26. De ce fait, la lumière émise par les autres feux n'influence pas la mesure du feu pour lequel le détecteur est sensible. La tension de sortie du détecteur 41 est appliquée à un circuit de décision 42 dans lequel elle est comparée avec une tension qui est fonction de la composante continue du signal de sortie de la cellule 36 apparaissant aux bornes du condensateur 39. Le circuit de décision 42 peut renfermer un générateur de seuil et fournit ainsi sur sa sortie un signal logique représentant l'état visible ou invisible du feu concerné. Ce signal est introduit dans l'ordinateur 20 *via* l'entrée 25.

Comme la luminosité ambiante dans le brouillard peut facilement varier d'un facteur de $10^4$ entre la pénombre et le plein jour et comme l'œil est plus sensible à de faibles différences de luminosité dans la pénombre qu'en plein jour, le circuit de décision 42 doit être associé à un générateur de seuil de visibilité en fonction d'un signal proportionnel à la luminosité ambiante. Un tel signal est par exemple la tension apparaissant aux bornes du condensateur 39, c'est-à-dire la composante continue du signal de sortie de la cellule 36. Il est avantageux de rendre très simple le générateur de seuil et de tenir compte de la grande variabilité de la luminosité ambiante par des moyens adaptés, par exemple par le fait de mesurer la composante alternative due au clignotement d'un feu déterminé dans la partie de la caractéristique de réponse de la cellule 36 qui est proche du niveau de saturation, comme décrit ci-dessous. Ainsi, le circuit 42, dans le meilleur des cas, n'est qu'un discriminateur de la tension proportionnelle à la composante alternative traversant le condensateur 40 par rapport à une fraction constante de la composante continue aux bornes du condensateur 39. En règle générale, cependant, ce cas idéal n'est pas atteint et la comparaison se fait par rapport à une fraction de la composante continue qui varie selon la valeur absolue de la luminosité ambiante, appréciée par exemple par la mesure de la tension d'alimentation de la source 37, introduite dans le circuit 42 *via* un conducteur 43. Un circuit de sélection du point de fonctionnement sur la caractéristique de réponse de la cellule 36 qui permet de choisir ce point par rapport et proche du niveau de saturation de cette caractéristique est décrit ci-dessous. La tension de la source 37 alimentant la cellule 36 est variable et maintenue constamment à une valeur telle que la composante continue engendrée par le niveau de la luminosité ambiante est légèrement inférieure au niveau de saturation de la cellule 36 par exemple 95 % de cette valeur. Un circuit approprié permettant de réaliser ce but est par exemple composé d'un diviseur de tension 44, 45 et d'un servo-amplificateur 46 dont la sortie ajuste la valeur de la tension de la source 37. La sortie de 46 est fonction d'une tension d'écart entre la tension fournie par le diviseur de tension 44, 45 et la composante continue du signal de sortie de la cellule 36, apparaissant aux bornes du condensateur 39 appliquées à l'entrée du servo-amplificateur 46.

Déjà dans le cas d'un seul feu allumé à la fois et à plus forte raison dans le cas où plusieurs feux sont allumés à la fois une saturation exagérée de la cellule 36 peut avoir lieu. Ceci peut être découvert dans un détecteur approprié 47 dont la sortie fournit un signal à une entrée 48 de l'ordinateur. Ce dernier peut alors imposer soit des fréquences plus lentes à la source 26 soit interrompre momentanément l'allumage de toutes les lampes ou l'allumage de toutes les lampes sauf une pour vérifier si la saturation exagérée provient des feux de l'aire de mesure ou d'autres causes.

## Revendications

1. Installation de mesure de la distance limite de visibilité dans le brouillard, comprenant une série de feux (27, 28, 29) disposée le long d'une aire de mesure, un dispositif optique (1) d'observation à focale variable projetant l'image d'un ou plusieurs feux de la série sur un écran d'observation, un dispositif de commande motorisé permettant la mise au point notamment de la focale variable du dispositif optique (1) sur un feu choisi de la série et l'allumage simultané des feux visés par le dispositif optique (1), caractérisé en ce que le moteur (18) du dispositif de commande actionnant la mise au point de la focale variable du dispositif optique (1) entraîne en même temps un ou plusieurs équipages mobiles (7, 8) qui se déplacent par rapport à un ou plusieurs équipages fixes (9), en ce que dans chaque ensemble constitué par un équipage mobile (8) et un équipage fixe (9) correspondants, l'un des deux équipages comprend au moins un détecteur (11) ou palpeur (12) d'informations numériques et/ou analogiques consignées sur l'autre des deux équipages et ayant pour objet le feu de la série des feux sur lequel la focale variable est mise au point.

2. Installation suivant la revendication 1, caractérisée en ce qu'elle comprend un équipement automatique composé d'un générateur de seuil (14) en fonction de la luminosité ambiante, d'un dispositif (16) de mesure de la luminosité des feux allumés et d'un comparateur (17) actionnant soit le moteur (18) réalisant la mise au point de la focale variable, soit un dispositif d'affichage.

3. Installation suivant la revendication 2, caractérisée en ce que les feux allumés de la série clignotent, chacun à une fréquence qui lui est propre, et en ce que le dispositif (16) de mesure de la luminosité des feux allumés est un détecteur synchrone adaptable aux fréquences propres des feux de la série.

4. Installation suivant la revendication 1, caractérisée en ce que le dispositif de commande motorisé comprend un ordinateur (20) aux entrées (24, 25, 48) duquel on applique les signaux récoltés par les détecteurs (11) et/ou palpeur (12), ainsi qu'un signal logique représentatif de la visibilité ou non visibilité d'un feu observé et en ce que des servo-moteurs (35, 35') pour le positionnement grossier du dispositif optique et/ou la focale variable et/ou l'ajustage fin d'un ensemble optique mobile (2) sont commandés par des sorties (23) dudit ordinateur (20).

5. Installation suivant la revendication 2, caractérisée en ce que le générateur de seuil (14) comprend un agencement de circuit de sélection du point de fonctionnement sur la caractéristique de réponse d'une cellule photométrique (36) et en ce que la sélection se fait par rapport au niveau de saturation de cette caractéristique et au voisinage de ce niveau.

6. Installation suivant la revendication 5, caractérisée en ce que le circuit de sélection comprend un diviseur (44, 45) de la tension d'alimentation de la cellule photométrique (36) fournie par une source (37) et un servo-amplificateur (46) dont la sortie commande la valeur de cette tension d'alimentation en fonction de la différence d'une tension d'écart entre la tension fournie par le diviseur de tension (44, 45) et la composante continue du signal de sortie de la cellule photométrique (36), appliquées à l'entrée de ce servo-amplificateur (46).

7. Installation suivant la revendication 3, caractérisé en ce qu'une source (26) présentant au moins autant de sorties de puissance à des fréquences différentes qu'il y a de feux (27, 28, 29) allumés simultanément le long de l'aire de mesure, en ce que les feux (27, 28, 19) sont reliés chacun dans un circuit de mise en série (30, 31, 32) raccordé à une de ces sortie de puissance et disposés en parallèle avec un dispositif de commutation (33) permettant de court-circuiter le feu, sauf un, a savoir un seul feu allumé dans chaque circuit, et en ce que les feux consécutifs le long de l'aire de mesure sont reliés à des circuits différents, de telle sorte que chacun des feux allumés clignote à une fréquence différente.

## Claims

1. Installation for measuring the maximum visual distance in fog, comprising a series of lights (27, 28, 29) arranged along a measurement area, an optical observation device (1) of variable focal distance projecting the image of one or more lights of the series on to an observation screen, a motorised control device permitting the focussing especially of the variable focal distance of the optical device (1) on a selected light of the series and the simultaneous lighting-up of the lights aimed at by the optical device (1), characterised in that the motor (18) of the control device actuating the focussing of the variable focal distance of the optical device (1) drives at the same time one or more mobile units (7, 8) which are displaced relatively to one or more fixed units (9), in that in each group constituted by a mobile unit (8) and a fixed unit (9) which corresponds thereto, one of the two units comprises at least one detector (11) or sensor (12) for numeric and/or analog data recorded on the other of the two units and relating to the light of the series of lights on which the variable focal distance has been focussed.

2. Installation according to claim 1, characterised in that it comprises an automatic apparatus composed of a threshold generator (14) acting in accordance with the ambient brightness, of a device for measuring (16) the brightness of the lighted-up lights, and of a comparator (17) actuating either the motor (18) effecting the focussing of the variable focal distance, or a display device.

3. Installation according to claim 2, characterised in that the lighted-up lights of the series wink, each at its own frequency, and in that the device (16) for measuring the brightness of the illuminated lights is a synchronous detector adaptable to the particular own frequencies of the lights of the series.

4. Installation according to claim 1, characterised in that the motorised control device comprises a computer (20) to the inputs (24, 25, 48) of which there are applied the signals collected by the detectors (11) and/or sensor (12), also a logic signal representing the visibility or non-visibility of a light observed, and in that servo-motors (35, 35') for the coarse positioning of the optical device and/or the variable focal distance and/or the fine adjustment of a mobile optical assembly (2) are controlled by outputs (23) of the said computer (20).

5. Installation according to claim 2, characterised in that the threshold generator (14) comprises a circuit arrangement for selection of the operating point on the response characteristic of a photometric cell (36), and in that the selection is made in relation to the saturation level of this characteristic and in the vicinity of this level.

6. Installation according to claim 5, characterised in that the selection circuit comprises a divider (44, 45) of the supply voltage of the photometric cell (36) provided by a source (37) and a servo-amplifier (46) whose output controls the value of this supply voltage in accordance with the difference of a deviation voltage between the voltage provided by the voltage divider (44, 45) and the continuous component of the output signal of the photometric cell (36) which are applied to the input of this servo-amplifier (46).

7. Installation according to claim 3, characterised in that a source (26) has at least as many power outputs at different frequencies as there are lights (27, 28, 29) illuminated simultaneously along the measurement area, in that the lights (27, 28, 19) are each connected into a series arrangement circuit (30, 31, 32) connected to one of these power outputs, and are arranged in parallel with a switching device (33) making it possible to short-circuit the lights, except one, namely only one light illuminated in each circuit, and in that the consecutive lights along the measurement area are connected to different circuits, in such a manner that each of the lights lit-up winks at a different frequency.

**Patentansprüche**

1. Anlage zum Messen der Sichtweite im Nebel, aus einer längs einer Meßzone angeordneten Reihe von Leuchtfeuern (27, 28, 29), einer optischen Beobachtungsvorrichtung (1) mit variabler Brennweite, die das Bild eines oder mehrerer Leuchtfeuer der Reihe auf einen Beobachtungsschirm projiziert, und aus einer motorisierten Steuervorrichtung, die insbesondere die Einstellung der variablen Brennweite der optischen Vorrichtung (1) auf ein gewähltes Leuchtfeuer der Reihe, und die gleichzeitige Einschaltung der von der optischen Vorrichtung (1) anvisierten Leuchtfeuer gestattet, dadurch gekennzeichnet, daß der Motor (18) der Steuervorrichtung, der die Einstellung der variablen Brennweite der optischen Vorrichtung (1) bewirkt, gleichzeitig ein oder mehrere bewegliche Organe (7, 8) antreibt, die bezüglich eines oder mehrerer feststehender Organe (9) verschoben werden, daß bei jeder Einheit aus einem beweglichen Organ (8) und einem entsprechenden feststehenden Organ (9) eines der zwei Organe mindestens einen Detektor (11) oder Fühler (12) für numerische und/oder analoge Informationen aufweist, die von dem anderen der zwei Organe festgehalten werden, und sich auf das Leuchtfeuer der Leuchtfeuerreihe beziehen, auf das die variable Brennweite eingestellt ist.

2. Anlage gemäß Anspruch 1, dadurch gekennzeichnet, daß sie eine automatische Einrichtung aufweist, aus einem Schwellengenerator (14) zur Erzeugung eines von der Umgebungshelligkeit abhängigen Schwellenwertes, einer Meßvorrichtung (16) zur Messung der Helligkeit der eingeschalteten Leuchtfeuer, und aus einem Komparator (17), der entweder den Motor (18) zur Einstellung der variablen Brennweite, oder eine Anzeigevorrichtung steuert.

3. Anlage gemäß Anspruch 2, dadurch gekennzeichnet, daß jedes der eingeschalteten Leuchtfeuer der Reihe mit einer eigenen Frequenz blinkt, und daß die Meßvorrichtung (16) zur Messung der Helligkeit der eingeschalteten Leuchtfeuer ein synchroner Detektor ist, der an die betreffenden Frequenzen der Leuchtfeuer der Reihe angepaßt werden kann.

4. Anlage gemäß Anspruch 1, dadurch gekennzeichnet, daß die motorisierte Steuervorrichtung einen Computer (20) aufweist, auf dessen Eingänge (24, 25, 48) die von den Detektoren (11) und/oder dem Fühler (12) aufgenommenen Signale, sowie ein für die Sichtbarkeit oder die Nichtsichtbarkeit eines beobachteten Leuchtfeuers repräsentatives logisches Signal gegeben werden, und daß Servomotoren (35, 35') für die Grobpositionierung der otpischen Vorrichtung und/oder die Grobeinstellung der variablen Brennweite und/oder die Feineinstellung einer beweglichen optischen Einheit (2) durch Ausgänge (23) des besagten Computers (20) gesteuert werden.

5. Anlage gemäß Anspruch 2, dadurch gekennzeichnet, daß der Schwellengenerator (14) eine Schaltungsanordnung zur Wahl des Betriebspunktes auf der Kennlinie einer photometrischen Zelle (36) aufweist, und daß die Wahl bezüglich des Sättigungsniveaus dieser Kennlinie, und nahe bei diesem Sättigungsniveau erfolgt.

6. Anlage gemäß Anspruch 5, dadurch gekennzeichnet, daß die Schaltung zur Wahl dieses Betriebspunktes einen Spannungsteiler (44, 45) zur Teilung der von einer Quelle (37) gelieferten Versorgunsspannung der photometrischen Zelle (36) aufweist, und außerdem einen Servoverstärker (46) enthält, dessen Ausgang den Wert dieser Versorgungsspannung in Abhängigkeit von dem Unterschied zwischen der von dem Spannungsteiler (44, 45) gelieferten Spannung und der Gleichstromkomponente des Ausgangssignals der photometrischen Zelle (36) steuert, wobei diese beiden Spannungen auf den Eingang dieses Servoverstärkers (46) gegeben werden.

7. Anlage gemäß Anspruch 3, dadurch gekennzeichnet, daß eine Quelle (26) mindestens ebenso viele Leistungsausgänge mit verschiedenen Frequenzen aufweist, wie gleichzeitig längs der Meßzone eingeschaltete Leuchtfeuer (27, 28, 29) vorhanden sind, daß jedes dieser Leuchtfeuer (27, 28, 29) in einem Serienkreis (30, 31, 32) liegt, der an einen dieser Leistungsausgänge angeschlossen ist, daß jedes dieser Leuchtfeuer (27, 28, 29) parallel zu einer Umschaltvorrichtung (33) angeordnet ist, die gestattet, das Leuchtfeuer kurzzuschließen, wobei ein einziges Leuchtfeuer in jedem Kreis eingeschaltet bleibt, und daß die längs der Meßzone aufeinanderfolgenden Leuchtfeuer an verschiedene Kreise angeschlossen sind, so daß jedes der eingeschalteten Leuchtfeuer mit einer verschiedenen Frequenz blinkt.

Fig. 1

Fig. 2

Fig.3